# EUROPEAN PATENT SPECIFICATION

(11) **EP 3 768 997 B1**
(45) Date of publication and mention of the grant of the patent: **25.02.2026**
(21) Application number: 19772278.8
(22) Date of filing: 25.03.2019
(51) Int. Cl.: F16J 15/18, F16J 15/16, F16K 41/02, F16J 15/20, F16K 41/04

(54) **PACKING MATERIAL CARTRIDGE**
VERPACKUNGSMATERIALPATRONE
CARTOUCHE DE MATÉRIAU D'EMBALLAGE

(30) Priority: 23.03.2018 US 201862647362 P
(43) Date of publication of application: 27.01.2021
(73) Proprietor: A.W. Chesterton Company, Groveland, MA 01834 (US)
(72) Inventor: MAHONEY, Philip, Michael, Roslindale, MA 02131 (US); FLAHERTY, Albert, P., Winchester, MA 01890 (US); COLE, Gregory, A., Barrington, NH 03825 (US)
(74) Representative: Sweetinburgh, Mark Roger
(86) International application number: PCT/US2019/023885
(87) International publication number: WO 2019/183631

(56) References cited:
- EP-B1- 1 098 116
- WO-A1-02/090803
- WO-A1-02/090803
- DE-C1- 19 941 617
- GB-A- 334 883
- JP-A- H0 893 921
- JP-A- S61 197 858
- US-A1- 2013 154 198
- US-A1- 2013 154 198
- US-A1- 2014 339 450
- "Catalog of Core Products: Value-Driven Solutions to Meet Industry Needs. Form No. EN24651: Core Products Catalog - English", CHESTERTON COMPANY, September 2017 (2017-09-01), pages 19, 24, XP055638346, Retrieved from the Internet <URL:https://chestertondocs.chesterton.com/Corporate/EN24651_Core_Products_Catalog_EN.pdf>

## Description

### Field of the Invention

The present invention relates to a method of forming a unitary packing cartridge for use with a fluid regulating device, and more particularly relates to a method of forming a unitary packing cartridge that is easy to mount within the fluid regulating device.

### Background of the Invention

There exists in the art many different types of fluid regulating devices, including valves, regulators, differential pressure transducers and the like. Conventional fluid regulating devices, such as valves, are used in many different types of commercial applications to help regulate the flow of a fluid through a fluid conveyance system. Conventional valves come in many different shapes and sizes, and can include for example block or gate valves, control valves and the like. When used in commercial applications, the valves typically employ a mechanical packing material to help reduce fluid loss and the amount of unwanted gaseous emissions, such as volatile organic compounds (VOCs) that leak or are accidentally emitted from the valve.

Then packing material typically includes a plurality of separate packing elements or components that are axially stacked together about a movable valve stem. The packing material typically comes in rope form that is cut to size by the user. Each separate cut piece of packing material is mounted within the valve, and a plurality of pieces are stacked together. A gland follower can then be tightened so as to compress the packing material. As the packing material is compressed, it expands radially to create a seal between a dynamic valve stem and a stationary stuffing box. The seal formed by the packing components forms a fluid seal and maintains a pressure boundary between the fluid inside the valve and the external atmosphere.

A drawback of the conventional mounting techniques for the packing components is that the length of the packing material to be cut from a roll of packing material needs to be calculated, the number of packing components that are needed to be mounted within the valve needs to be determined, and then the user cuts the requisite number of packing components from the roll. The individual packing components are then individually mounted and stacked within the valve one at a time, with careful attention being paid to the orientation of the end of each ring of packing material. That is, each ring of packing material needs to be oriented such that the joint, seam or cut region is a selected number of degrees, such as 90° or 120°, away from the joint of the adjacent rings. This can be a time consuming process that requires some level of expertise.

DE19941617 describes a shaft seal manufacturing method in which graphite material is rolled to form thin layers pressed together by diametrically opposing press plates. JP H08 93921 discloses a gland packing for mounting in a stuffing box. EP1098116 discloses an expanded graphite knitting yarn and a gland packing. GB334883 describes packing material for glands, stuffing boxes and like sealing devices.

### Summary of the Invention

It is therefore an object of the present invention to provide a unitary cartridge of packing material that includes a plurality of packing components that have been mechanically linked (e.g., compressed) together. The packing material cartridge can thus be mounted within the valve as a single, unitary component, thus simplifying the packing installation process. The orientation of each of the packing components is handled during formation or creation of the packing cartridge, and the user does not have to be concerned with the orientations of the separate packing components during installation.

The packing cartridge is formed by initially stacking together separate rings of packing material, each of which forms a packing component. The seams of each of the packing components are oriented relative to each other and in a selected manner so as to minimize fluid leakage therethrough. The stack of packing components are then compressed in opposite directions to form the packing cartridge. According to one embodiment, the invention can employ a two-step compression process using one or more press machines, such as a hydraulic press. The stack of packing components are placed within a die tool assembly that includes a barrel within an internal post. The individual and separate packing components are oriented and mounted within the barrel. Once other components of the die tool assembly are assembled therewith, the stack of packing components are subjected to a compression force in a first direction for a selected amount of time, and then a second compression force in a second direction opposite to the first direction for a selected period of time. The compression forces can be applied simultaneously or sequentially. For example, after the first or initial compression force is applied and the released, the assembly can then be manipulated (e.g., reversed or flipped around) and selected die tool components can be added or removed. Once the assembly is complete, a second compression force is applied to the stacked and partially compressed packing components in an opposed direction for a selected amount of time. The bi-directional compression of the packing components creates a packing cartridge where the packing components comprising the cartridge are mechanically linked together through the compression forces applied thereto. The packing components forming the packing cartridge are difficult to separate once linked together. As such, the packing cartridge can be handled and installed within the valve as a single unitary assembly or unit.

According to the present invention, there is provided a method of forming a unitary packing cartridge from a plurality of packing components configured for subsequent installation in a fluid regulating device, comprising
placing a plurality of individual braided packing components in a stacked manner in a die tool assembly,
compressing the plurality of braided packing components in a first direction,
compressing the plurality of braided packing components in a second direction opposite the first direction to form the unitary packing cartridge, wherein in the unitary packing cartridge the plurality of braided packing components are mechanically linked together via compression free of a fastening device or an adhesive to form the packing cartridge, and
removing the packing cartridge from the die tool assembly as a unitary assembly, wherein the unitary assembly is configured for subsequent installation within the fluid regulating device.

The method may also include, after the step of compressing the plurality of packing components in the first direction, manipulating (such as positioning, orienting, reorienting, reversing or the like) the die tool assembly so that the packing components can be compressed in the second direction. The die tool assembly may include a barrel component having a chamber, a seat element disposed in the chamber, and a post disposed in a chamber of the seat element. The plurality of packing components are preferably disposed within the chamber of the barrel component. The die tool assembly can optionally include first and/or second stop elements that are in contact with top and/or bottom surfaces of the barrel component, respectively.

The compression forces can be applied to the plurality of packing components for a selected period of time. For example, the compression forces can be applied to the plurality of packing components for a time period between about 1 second and about 90 seconds. Further, the density of each of the plurality of packing components forming the packing cartridge can be between about 1.2 g/cc and about 2.5 g/cc.

The packing cartridge is suitable for use with a fluid regulating device and comprises a cartridge main body composed of a plurality of packing components that are stacked together to form the packing cartridge, where the packing components are mechanically linked together free of a fastening device or adhesive. The density of each of the packing components forming the packing cartridge is preferably between about 1.2 g/cc and about 2.5 g/cc.

Further, each of the plurality of packing components may comprise a plurality of packing strands that are braided together, wherein each of the packing strands includes one or more packing yarns disposed within a reinforcing element. According to one embodiment, the packing yarn is formed of graphite, and the reinforcing element is a wire mesh composed of metal.

### Brief Description of the Drawings

These and other features and advantages of the present invention will be more fully understood by reference to the following detailed description in conjunction with the attached drawings in which like reference numerals refer to like elements throughout the different views. The drawings illustrate principals of the invention and, although not to scale, show relative dimensions.
FIG. 1 is a schematic cross-sectional view of a conventional valve component mounting the packing cartridge according to the teachings of the present invention.
FIG. 2 is a cross-sectional view of an exemplary packing component employed in the packing cartridge of the present invention.
FIG. 3 is an exploded perspective view of the components of the die tool assembly described herein.
FIG. 4A is a cross-sectional view of the barrel portion of the die tool assembly pre-loaded with a series of packing components according to the teachings of the present invention.
FIG. 4B is a cross-sectional view of the completed die tool assembly pre-loaded with a series of packing components and positioned so that a press machine applies a compressive force to the stacked packing components according to the teachings of the present invention.
FIG. 4C is a cross-sectional view of the die tool assembly after the compressive force is applied in a first direction to the stacked packing components according to the teachings of the present invention.
FIG. 4D is a cross-sectional view of the die tool assembly after the assembly is flipped around according to the teachings of the present invention.
FIG. 4E is a cross-sectional view of the die tool assembly positioned so that the press machine applies a compressive force to the stacked packing components in an opposed direction, thus forming the packing cartridge of the present invention.
FIGS. 4F-4J are cross-sectional views of the die tool assembly after selected components are removed and re-arranged so as the remove the packing cartridge from the barrel component of the assembly according to the teachings of the present invention.
FIG. 5 is a cross-sectional view of the packing material cartridge according to the teachings of the present invention.
FIG. 6 is a schematic flow chart diagram showing the steps involved with applying compression forces to the packing elements in the die tool assembly in opposite directions.
FIG. 7 is a cross-sectional view of a second embodiment of the present invention showing the die tool assembly oriented in a horizontal direction and used with one or more press machines to apply the compression forces in opposite directions.

### Detailed Description

The present invention is directed to a mechanical packing material suitable for use with a fluid regulating device for reducing or minimizing leakage therefrom. As used herein, the term "fluid regulating device" is intended to encompass any selected device that helps, assists, prevents, or regulates the flow of a fluid through a fluid transport or conveyance medium, such as a pipe. The fluid regulating device is preferably of a type that employs a packing material, and can include valves, regulators, and the like. When a valve is employed, the valves can have any selected size and shape, and can include for example a hydraulic valve, a manual valve, a pneumatic valve, a solenoid valve, or a motor valve. Types of valves that are suitable for use with the present invention can include a block valve including a gate, butterfly, ball and plug valves, a control valve, or a check valve including quarter turn and globe valves. Those of ordinary skill will readily recognize that the packing material of the present invention can also be used with mechanical seals.

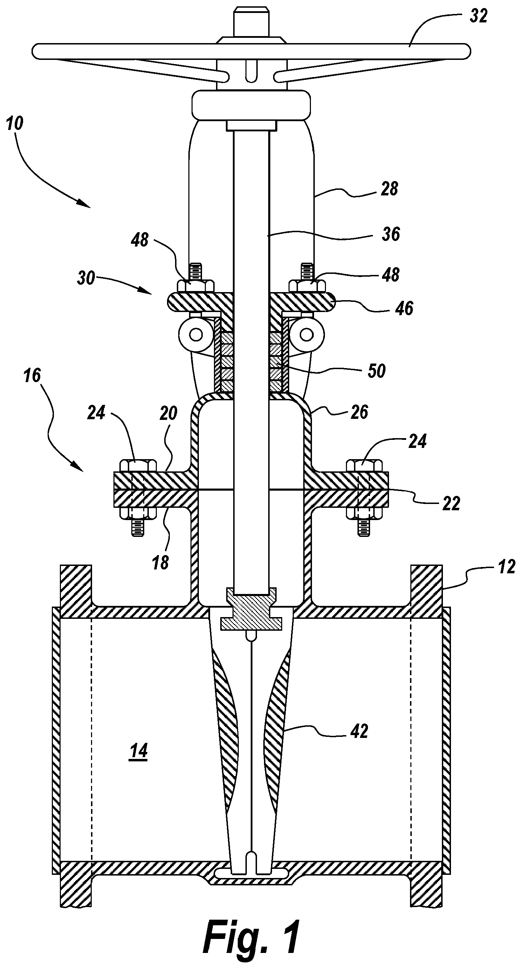

Figure 1 is a schematic view of an exemplary fluid regulating device, such as a block valve 10, that employs the packing material cartridge of the present invention. Those of ordinary skill in the art will readily recognize that the block valve illustrated herein is only one type of fluid regulating device that can be used with the present invention, and that other types of valves and devices can also be used. The block valve is shown for purposes of illustration and for the sake of simplicity. The illustrated block valve 10 includes a body portion 12 that has an opening or chamber 14 formed therein. Each end of the body 12 is adapted to be coupled to a fluid pipe that carries the fluid to be regulated by the valve 10. The body 12 is coupled to a bonnet portion 16. The bonnet portion 16 is typically formed of a first bonnet portion 18 that is coupled to the body 12 and a second bonnet portion 20 that is coupled to the remainder of the valve, including the integrally formed bonnet bushing 26. A gasket 22 is mounted between the first and second bonnet portions, which are then secured together via suitable fasteners, such as the illustrated bolt and nut assemblies 24, 24. The bonnet bushing 26 is coupled to a yoke portion 28 via a gland and flange portion 30. The yoke 28 is then coupled to a handwheel 32. Typically, the gland and flange portion can comprise flange and gland nose elements that are independent elements of the bonnet and yoke of the valve 10. The yoke 28 can be cast or formed as part of the bonnet assembly to support the valve stem and thrust bearing. As such, the gland and flange portion 30 can be removable sub-sections of the bonnet bushing 26 connected by the gland bolts 48.

The illustrated handwheel 32 is coupled to one end of a vertically movable valve stem 36. The handwheel when rotated serves to move the valve stem 36 upwards and downwards in a vertical directions depending upon the direction of rotation of the wheel. The valve stem 36 is coupled at the other end to a valve wedge assembly 42 that is disposed in the chamber 14. The valve wedge assembly 42 serves to regulate the flow of fluid passing through the body 12 depending upon the position of the assembly 42 within the chamber 14, as is known in the art. The gland and flange portion 30 can include a flange or gland element 46 that seats against a packing material cartridge 50 that is mounted therein. The gland element 46 can be moved in the vertical direction by tightening the gland bolts 48, 48. When the gland bolts are tightened, the packing material cartridge 50 is further compressed by the gland element 46, as is known in the art. The packing material cartridge 50 is intended to form a fluid tight seal with the valve stem 36. The packing material cartridge 50 can be composed of a series or plurality of axially abutting packing rings or components, which are wrapped around the valve stem shaft and provides an interface and dynamic sealing surface between the shaft and the remainder of the fluid regulating device. Over time, the packing material cartridge 50 tends to decompose and lose volume, thus allowing emissions to escape the valve. In order to address the unwanted loss of volume and hence the increase in fugitive emissions, the operator of the valve can typically compress the packing cartridge further via the gland bolts 48, 48.

The packing material cartridge 50 of the present invention can include a plurality of individual packing components 54 that are generally ring shaped and formed of a packing material. The packing material typically comes in rope form that is cut to size by the user. The packing material is then shaped as a ring. The packing material cartridge 50 is formed by initially stacking together separate packing components 54. The seams of each of the packing components are oriented relative to each other and in a selected manner so as to minimize fluid leakage therethrough.

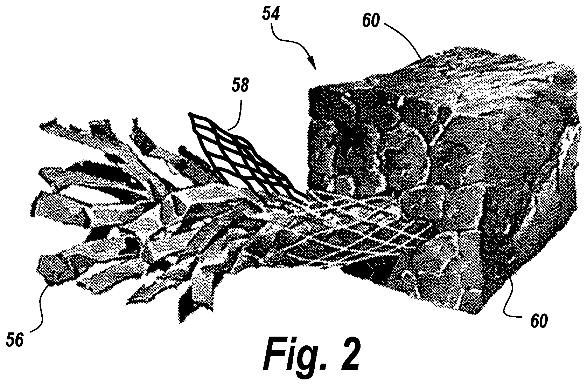

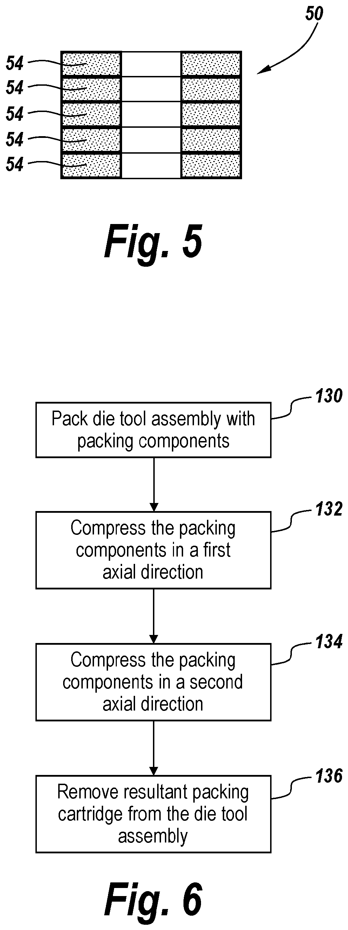

The packing components 54 of the packing material cartridge 50 of the present invention can have any selected shape and size, and can be formed in an interbraid pattern or a square braid pattern, or any other suitable braiding pattern known to those of ordinary skill in the art. The packing component 54 may be in the form of a braided material that is commonly square or round when viewed in cross section, although the packing component 54 may be provided in a variety of cross-sectional shapes. Multiple packing components 54 may be provided along the length of the valve stem shaft 36 in order to provide a seal around the shaft. Although the present invention can be employed with any suitable type and shape of packing material, for the sake of simplicity a square braid pattern is shown in Figures 2 and 5. As is known in the art, a square braid is formed by braiding multiple yarns, typically of the same type of material, along a set of material paths. For example, as shown, the packing component 54 is formed of a packing material that includes one or more yarn components 56 that are disposed within a reinforcing material or structure, such as the wire mesh 58, to form a packing strand. The illustrated packing component has a main body that has a plurality of side surfaces 60. The main body can be coated with any suitable material, such as polytetrafluoroethylene (PTFE), as is known in art. The yarn 56 can be formed of any suitable material, and can be formed for example of graphite. Other materials include mica, vermiculite, and polytetrafluoroethylene (PTFE). The wire mesh 58 can be formed of any suitable material, such as metal, examples of which include copper, brass, lead, Inconel, stainless steel, or monel materials. The illustrated packing component 54 is formed by braiding together individual packing strands to form the packing component. One of ordinary skill in the art will readily recognize that the packing material can be formed from multiple different types of materials, and can be braided in a symmetrical or asymmetrical manner relative to a lateral or horizontal axis across a cross-sectional face of the packing material. The packing material forming the packing component can be selected for specific applications and to exhibit selected properties, as is known in the art. Examples of various types of braids and braiding patterns are shown in U.S. Patent No. 9,388,903. Examples of the type of packing components suitable for use in the packing cartridge of the present invention include the 1400R, 1600, 1601, and 1622 brand packing materials sold by A.W. Chesterton Co.. Other types of packing materials can also be used.

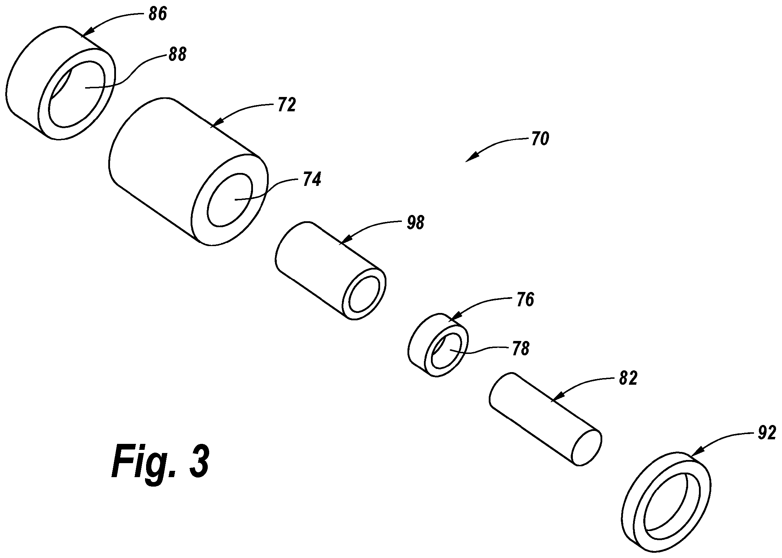

The packing material cartridge 50 of the present invention can be formed by employing a die tool assembly 70 according to the teachings of the present invention. Specifically, the present invention contemplates forming a single packing material cartridge from a plurality of packing components 54 by compressing the packing components in opposed directions either simultaneously or sequentially. For example, the present invention can employ a single step or a multi-step compression process for applying a compression force to the packing components from both axial or radial directions. Those of ordinary skill in the art will readily recognize that the illustrated die tool assembly 70 is merely exemplary and can have any selected configuration or employ different parts than those illustrated herein without departing from the scope of the present invention. For the sake of simplicity, a multi-step compression process is described below. As shown in Figure 3, the die tool assembly 70 can include a barrel component 72, a seat element 76, a post 82, and one or more stop elements, such as stop element 86 and stop element 92. A pusher element 98 can be used to push packing components 54 into the barrel component 72. The stop elements 86, 92 and the barrel component have generally the same inner and outer diameters, and hence can be stacked together. The seat element 76 has an outer diameter that is generally the same as the inner diameter of the barrel component 72 and the stop elements 86, 92. As such, the seat element can seat within the stop elements or the barrel component. The seat element 76 seats the post 82 and centers the post within the barrel component and the stop elements. The post 82 has an outer diameter that is generally about the same as the inner diameter of the seal element 76, and as such is mounted therein. The die tool assembly 70 can be employed with any suitable press machine, such as a hydraulic press, a forging press, or a mechanical press, to help push the pusher element 98 under pressure into the barrel component 72 to compress the packing components mounted therein.

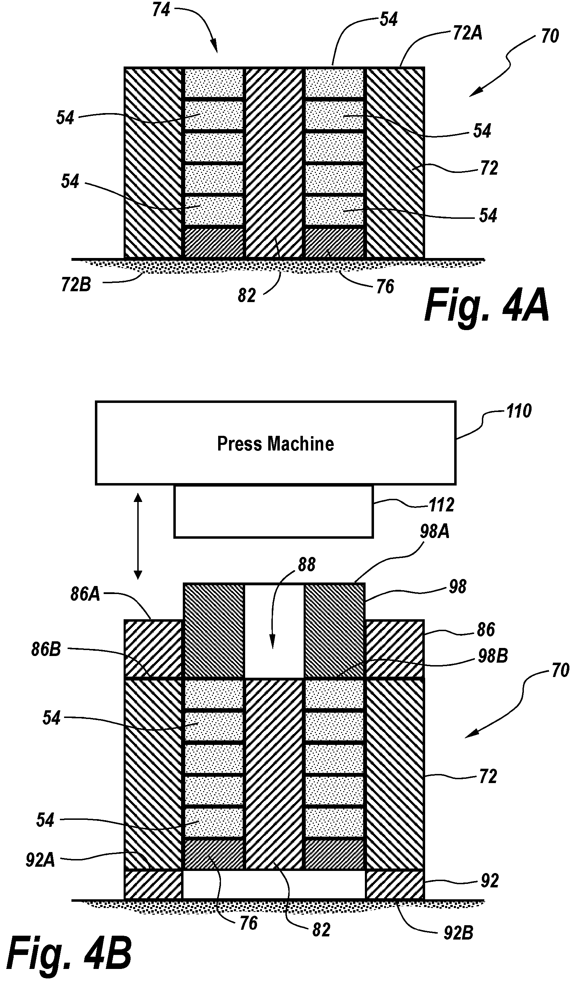

The die tool assembly 70, once assembled, is shown in Figures 4A-4J. The die tool assembly can be oriented in a vertical manner for vertical or axial compression of the packing components or can be oriented in any other suitable directions or orientations, such as in a horizontal manner for horizontal or radial compression of the packing components. For the sake of simplicity, Figures 4A-4J illustrate the die tool assembly 70 in a vertical orientation for axial or vertical compression of the packing components. As shown for example in Figure 4A, the seat element 76 is mounted within the inner chamber or lumen 74 of the barrel component 72. The post 82 is mounted within the chamber 78 of the seat element 76. The packing components 54 are then inserted into the chamber 74 of the barrel component and about the post 82. When inserted therein, each packing component 54 needs to be oriented such that the joint or seam is a selected number of degrees, such as 90° or 120°, away from the seam of the adjacent packing components. The illustrated die tool assembly 70 is configured to seat five packing components 54, although one of ordinary skill in the art will readily recognize that the die tool assembly can be configured to seat any selected number of packing components 54.

As shown in Figure 4B, the packed barrel component 72 is then mated with a bottom stop element 92, whereby a top surface 92A of the stop element 92 is placed in direct intimate facing contact with the bottom surface 72B of the barrel component 72. The stop element 92 also includes a bottom surface 92B, which is placed on any suitable support surface. The axially uppermost stop element 86 is disposed at a top portion of the die tool assembly 70. In this configuration, the bottom surface 86B of the stop element 86 contacts the top surface 72A of the barrel component 72. The stop element 82 also includes a top surface 86A. The pusher element 98 is disposed within the chamber 88 of the stop element 86, and includes a top surface 98A and a bottom surface 98B that contacts the axially topmost packing component 54.

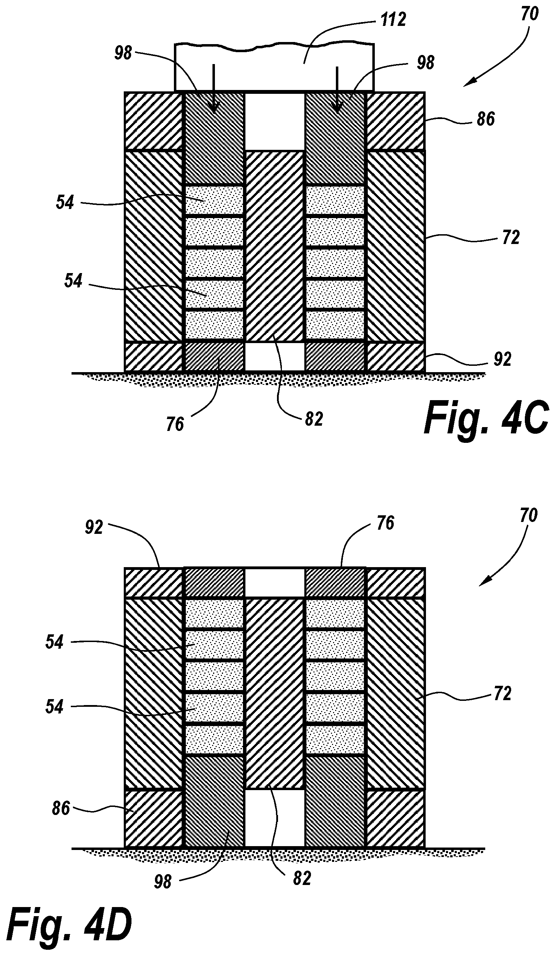

The fully assembled and packed die tool assembly 70 is then disposed beneath a suitable press machine 110, such as a hydraulic press. Although a single press machine is illustrated, those of ordinary skill will readily recognize that multiple opposed press machines can also be used for bi-directional compression. The illustrated hydraulic press includes an axially movable pressing component, such as the axially movable piston 112. The piston 112, when actuated, contacts the top surface 98A of the pusher element 98. The bottom surface 98B of the pusher element when under pressure axially moves the packing components 54 and the seal element 76 axially downward until the seat element 76 reaches the support surface that contacts the bottom surface 92B of the stop element 92, Figure 4C. The piston 112 continues to compress the packing components until the piston reaches the top surface 86A of the stop element 86. This stops the axially downward compressive force applied to the packing components 54. The packing components 54 remain under pressure for a selected period of time, ranging from between about 1.0 second to about 90 seconds, preferably between about 30 seconds and about 45 seconds, and most preferably about 40 seconds. This is the initial or first compression of the packing components in a first axial direction. Those of ordinary skill will readily recognize and be able to determine the appropriate compression time based on the type of packing material employed in the packing components, the number of packing components mounted within the barrel component 72, the shape and size of the packing component, and the preferred final cartridge dimensions.

Figures 4D through 4F illustrate the application of a second compressive force to the packing components in a direction opposite to the direction of the first compressive force. In the illustrated exemplary embodiment, since the first compressive force is an axial or vertical compressive force employing a single press machine, then the die tool assembly can be flipped or reversed so as to apply the second compressive force. Alternatively, and contemplated by the present invention, a second press machine (not shown) can be used opposite to the first press machine 110 to apply the second opposite compressive force. According to still another contemplated embodiment of the present invention, the die tool assembly 70 can be disposed in a horizontal direction and employed with one or more press machines to apply the compressive forces in a horizontal direction to the packing components either sequentially or simultaneously.

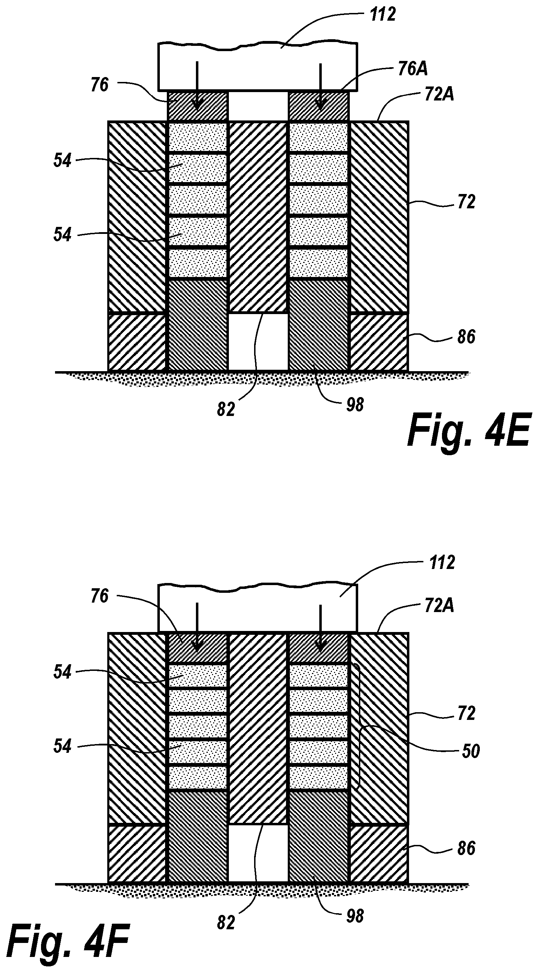

As shown in Figures 4D-4F, the compressive force applied by the piston 112 is removed from the die tool assembly 70, and then the die tool assembly is manipulated or reoriented (e.g., reversed or flipped), since a single press machine is being used, such that the stop element 92 is now on the top and the stop element 86 is now on the bottom, Figure 4D. The flipping of the die tool assembly 70 enables the compression of the packing components in a second direction opposite the first direction. The stop element 92 is removed from the die tool assembly 70 and is then positioned beneath the piston 112 of the press machine 110. The piston 112 applies an axially downward press force as indicated by arrows to the top surface 76A of the seat element 76, Figure 4E. The piston 112 travels downward until the piston contacts the top surface 72A of the barrel component 72, which in essence functions as a stop element, Figure 4F. The packing components can remain under pressure for a selected period of time similar to the above. That is, the packing components 54 can remain under pressure for a selected period of time ranging from between about 1.0 second to about 90 seconds, preferably between about 30 seconds and about 45 seconds, and most preferably about 40 seconds. The packing components 54 are now sufficiently compressed to form a single packing cartridge 50.

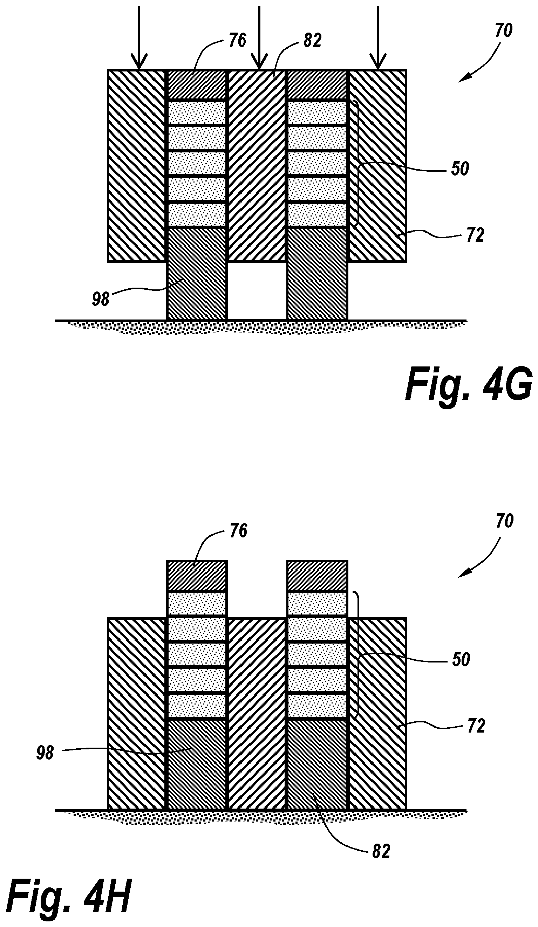

The packing cartridge 50 is then removed from the die tool assembly 70. As shown in Figures 4G and 4H, the stop element 86 is removed from the die tool assembly 70 and then an axially downward force is applied to the top surface 72A of the barrel component 72 as well as to the post 82. The downward force can be applied by any suitable mechanism or means, including the piston 112 of the press machine 110. The barrel component 76 and the post 82 are driven axially downward until the barrel contacts the surface upon which the die tool assembly rests (e.g., resting surface). This exposes the seat element 76 as well as a portion of the packing material cartridge 50.

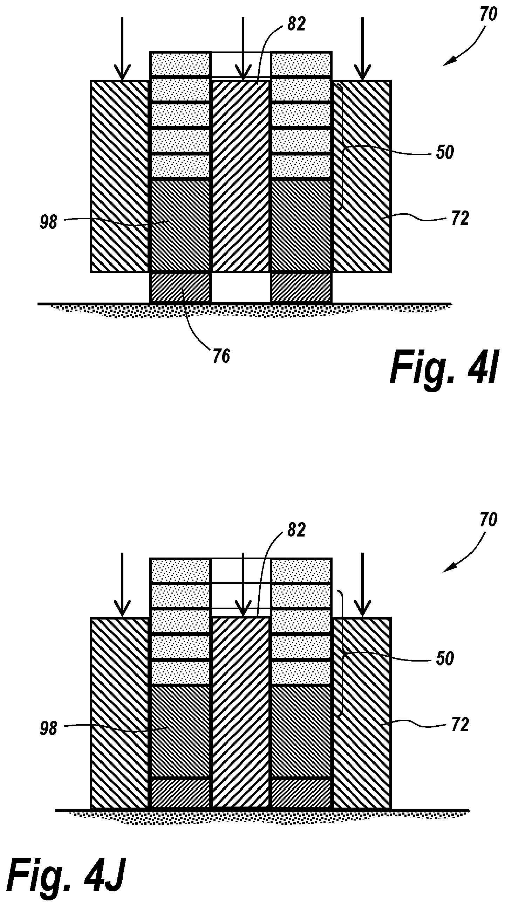

Once the packing components 54 have been compressed in opposite directions, the resultant packing cartridge 50 needs to be removed from the die tool assembly 70. In addition to the exemplary process illustrated in Figures 4I-4J, an extraction tool configured for use with the die tool assembly can be employed to remove the cartridge 50. Alternatively, a pneumatic piston and clamp can be employed to extract the cartridge and/or internal components of the die tool assembly. As shown in Figures 4I and 4J, the seat element 76 is removed from the top of the assembly and is placed on the bottom of the assembly adjacent to and in contact with the pusher element 98. An axially downward force as indicated by the arrows is applied to the barrel component 72 and to the post 82 until they contact the resting surface, which functions as a stop. This exposes more of the packing cartridge 50. The packing cartridge can then be removed from the die tool assembly 70.

The resultant packing material cartridge 50 is shown in Figure 5. As shown, the packing material cartridge 50 has a main body that includes the packing components 54 which are mechanically coupled or linked together. As used herein, the term "mechanically linked" is intended to mean that the plurality of packing components 54 are linked together to form a single cartridge component. The single cartridge component can be handled or manipulated as a single unit and, at least prior to installation in the fluid regulating device 10, the individual packing components 54 remain linked or coupled together. The packing components 54 forming the packing material cartridge 50 are linked together without the need for a supplemental or external fastening device or adhesive. That is, the packing components 54 are linked together to form the cartridge 50 free of any fastening device or adhesive. According to the current embodiment, the packing material forming the packing components includes graphite, which when compressed becomes mechanically interlocked or bonded together with adjacent graphite. When interlocked or bonded, the packing components form a single cartridge unit.

The compression of the packing components 54 in opposite directions as described above to form the packing material cartridge 50 ensures that the individual packing components comprising the cartridge have the same degree of compression and do not substantially vary in height. If the stack of packing components 54 within the die tool assembly 70 are only compressed in a single direction, the compressed height of each packing component increases from the top to the bottom, indicating that the packing components undergo uneven compression. By applying the compression force to the stacked set of packing components in the opposite direction, the packing components undergo more even compression across the stack. This results in packing components having generally the same height, that is, within about 0.01 inches of each other. The density of each of the packing components forming the packing material cartridge is between about 1.2 g/cc and about 2.5 g/cc, preferably between about 1.8 g/cc and about 2.2 g/cc, and most preferably about 2.0 g/cc. Moreover, compressing the packing components 54 within the die tool assembly 70 helps retain the dimensional stability of the resultant cartridge. The present invention also contemplates the use of a packing component that employs braided and nonbraided material or components.

Figure 6 is a schematic flow chart indicating the steps involved when forming the packing material cartridge 50 of the present invention. The die tool assembly 70 is partially or completely assembled and then the packing components 54 are placed within the barrel component 72 of the assembly 70, step 130. The packed die tool assembly 70 can have additional components coupled thereto if desired, such as the stop elements 86 and 92, as well as the pusher element 98. The assembly 70 is then placed under one or more press machines, which presses the pusher member 98 and hence compresses the packing components 54 in a first axial direction, step 132. In order to compress the packing elements in a second opposite direction, the die tool assembly is reoriented and optionally selected components of the assembly can be removed, such as for example the stop element 92. The die tool assembly can then be positioned once again beneath a press machine, which can compress the packing components 54 in a second direction opposite the first direction, step 134. The die tool assembly 70 can then be manipulated as shown in Figures 4G-4J to remove the packing cartridge 50 from the assembly 70. Alternatively, the first and second compression forces can be applied simultaneously in addition to the above sequential methodology.

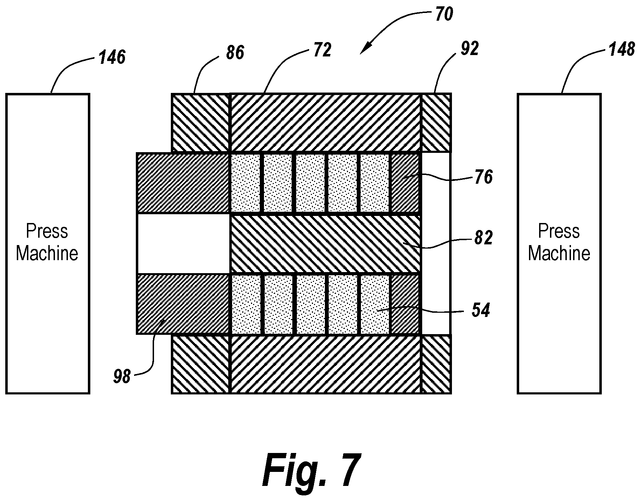

Figure 7 illustrates a second embodiment of the present invention. As illustrated, the die tool assembly 70 can be oriented in a horizontal manner and can be associated with one or more press machines, such as for example press machines 146 and 148. The press machines 146, 148 are configured to apply a compressive force to the packing components 54 in opposite directions. The illustrated die tool assembly 70 can have any selected shape or number of components, and can be associated with one or more press machines. The packing components 54 can be held under compression for any selected period of time, such as for example the same period of time as shown in the first embodiment. In the current orientation, the die tool assembly 70 does not need to flipped or reversed to apply the opposed compressive forces.

The invention is described herein relative to illustrated embodiments. Those skilled in the art will appreciate that the present invention may be implemented in a number of different applications and embodiments and is not specifically limited in its application to the particular embodiment depicted herein.

The terms "axial" and "axially" used herein refer to a direction generally parallel to the axis of a shaft or refers to vertically up or down. The terms "radial" and "radially" used herein refer to a direction generally perpendicular to the axis of a shaft or side to side. The terms "fluid" and "fluids" refer to liquids, gases, and combinations thereof.

It will thus be seen that the invention efficiently attains the objects set forth above, among those made apparent from the preceding description. Since certain changes may be made in the above constructions without departing from the scope of the invention as defined by the claims, it is intended that all matter contained in the above description or shown in the accompanying drawings be interpreted as illustrative and not in a limiting sense.

Having described the invention, what is claimed as new and desired to be secured by Letters Patent is:

## Claims

1. A method of forming a unitary packing cartridge from a plurality of packing components configured for subsequent installation in a fluid regulating device, comprising
placing a plurality of individual braided packing components (54) in a stacked manner in a die tool assembly (70),
compressing the plurality of braided packing components (54) in a first direction,
compressing the plurality of braided packing components (54) in a second direction opposite the first direction to form the unitary packing cartridge (50), wherein in the unitary packing cartridge (50) the plurality of braided packing components (54) are mechanically linked together via compression free of a fastening device or an adhesive to form the unitary packing cartridge (50), and
removing the packing cartridge (50) from the die tool assembly (70) as a unitary assembly, wherein the unitary assembly is configured for subsequent installation within the fluid regulating device (10),
wherein the unitary packing cartridge is suitable for use with a fluid regulating device and comprises a cartridge main body composed of a plurality of braided packing components (54) that are stacked together to form the unitary packing cartridge (50), where the plurality of braided packing components (54) are mechanically linked together free of a fastening device or adhesive.

2. The method of claim 1, wherein the compression forces are applied simultaneously or sequentially.

3. The method of claim 1, further comprising, after the step of compressing the plurality of braided packing components (54) in the first direction, re-orienting the die tool assembly (70) so that the braided packing components (54) can be compressed in the second direction.

4. The method of claim 1, further comprising assembling the die tool assembly (70) with a barrel component (72) having a chamber (74), a seat element (76) disposed in the chamber, and a post (82) disposed in a chamber of the seat element, wherein the plurality of braided packing components (54) are disposed within the chamber (74) of the barrel component (72).

5. The method of claim 4, wherein the die tool assembly (70) further includes one or more stop elements (86, 92), preferably first and second stop elements (86, 92), in contact with top and bottom surfaces of the barrel component (72), respectively.

6. The method of claim 1, further comprising maintaining the compression forces on the plurality of braided packing components (54) for a selected period of time.

7. The method of claim 6, further comprising maintaining the compression forces on the plurality of braided packing components (54) for a time period between about 1 second and about 90 seconds.

8. The method of claim 1, wherein the density of each of the plurality of braided packing components (54) forming the packing cartridge (50) is between about 1.2 g/cc and about 2.5 g/cc.

9. The method of claim 1, further comprising simultaneously compressing the plurality of braided packing components (54) in the first direction and the second direction and maintaining the compression forces on the plurality of braided packing components (54) for a selected period of time.

## Patentansprüche

1. Verfahren zum Bilden einer einheitlichen Verpackungspatrone aus einer Vielzahl von Verpackungskomponenten, die für anschließende Installation in einer Fluidregulierungsvorrichtung konfiguriert ist, umfassend
Platzieren einer Vielzahl von einzelnen geflochtenen Verpackungskomponenten (54) in einer gestapelten Weise in einer Matrizenwerkzeuganordnung (70),
Komprimieren der Vielzahl von geflochtenen Verpackungskomponenten (54) in einer ersten Richtung,
Komprimieren der Vielzahl von geflochtenen Verpackungskomponenten (54) in einer zweiten Richtung entgegengesetzt zu der ersten Richtung, um die einheitliche Verpackungspatrone (50) zu bilden, wobei in der einheitlichen Verpackungspatrone (50) die Vielzahl von geflochtenen Verpackungskomponenten (54) über Kompression frei von einer Befestigungsvorrichtung oder einem Klebstoff mechanisch miteinander verknüpft ist, um die einheitliche Verpackungspatrone (50) zu bilden, und
Entfernen der Verpackungspatrone (50) aus der Matrizenwerkzeuganordnung (70) als eine einheitliche Anordnung, wobei die einheitliche Anordnung für anschließende Installation innerhalb der Fluidregulierungsvorrichtung (10) konfiguriert ist,
wobei die einheitliche Verpackungspatrone zur Verwendung mit einer Fluidregulierungsvorrichtung geeignet ist und einen Patronenhauptkörper umfasst, der aus einer Vielzahl von geflochtenen Verpackungskomponenten (54) besteht, die miteinander gestapelt ist, um die einheitliche Verpackungspatrone (50) zu bilden, wobei die Vielzahl von geflochtenen Verpackungskomponenten (54) frei von einer Befestigungsvorrichtung oder Klebstoff mechanisch miteinander verknüpft ist.

2. Verfahren nach Anspruch 1, wobei die Kompressionskräfte gleichzeitig oder sequentiell aufgebracht werden.

3. Verfahren nach Anspruch 1, ferner umfassend, nach dem Schritt des Komprimierens der Vielzahl von geflochtenen Verpackungskomponenten (54) in der ersten Richtung, Neuausrichten der Matrizenwerkzeuganordnung (70), sodass die geflochtenen Verpackungskomponenten (54) in der zweiten Richtung komprimiert werden können.

4. Verfahren nach Anspruch 1, ferner umfassend Zusammenbauen der Matrizenwerkzeuganordnung (70) mit einer Zylinderkomponente (72), die eine Kammer (74) aufweist, einem Sitzelement (76), das in der Kammer angeordnet ist, und einem Pfosten (82), der in einer Kammer des Sitzelements angeordnet ist, wobei die Vielzahl von geflochtenen Verpackungskomponenten (54) innerhalb der Kammer (74) der Zylinderkomponente (72) angeordnet ist.

5. Verfahren nach Anspruch 4, wobei die Matrizenwerkzeuganordnung (70) ferner ein oder mehrere Anschlagelemente (86, 92), bevorzugt erste und zweite Anschlagelemente (86, 92), jeweils in Kontakt mit oberen und unteren Oberflächen der Zylinderkomponente (72) beinhaltet.

6. Verfahren nach Anspruch 1, ferner umfassend Aufrechterhalten der Kompressionskräfte an der Vielzahl von geflochtenen Verpackungskomponenten (54) für einen ausgewählten Zeitraum.

7. Verfahren nach Anspruch 6, ferner umfassend Aufrechterhalten der Kompressionskräfte an der Vielzahl von geflochtenen Verpackungskomponenten (54) für einen Zeitraum zwischen etwa 1 Sekunde und etwa 90 Sekunden.

8. Verfahren nach Anspruch 1, wobei die Dichte von jeder aus der Vielzahl von geflochtenen Verpackungskomponenten (54), welche die Verpackungspatrone (50) bildet, zwischen etwa 1,2 g/cc und etwa 2,5 g/cc ist.

9. Verfahren nach Anspruch 1, ferner umfassend gleichzeitiges Komprimieren der Vielzahl von geflochtenen Verpackungskomponenten (54) in der ersten Richtung und der zweiten Richtung und Aufrechterhalten der Kompressionskräfte an der Vielzahl von geflochtenen Verpackungskomponenten (54) für einen ausgewählten Zeitraum.

## Revendications

1. Procédé de formation d'une cartouche d'emballage unitaire à partir d'une pluralité d'éléments d'emballage configurés pour une installation ultérieure dans un dispositif de régulation de fluide, comprenant
le placement d'une pluralité d'éléments d'emballage tressés individuels (54) de manière empilée dans un ensemble d'outil de matrice (70),
la compression de la pluralité d'éléments d'emballage tressés (54) dans une première direction, la compression de la pluralité d'éléments d'emballage tressés (54) dans une seconde direction opposée à la première direction pour former la cartouche d'emballage unitaire (50), dans la cartouche d'emballage unitaire (50) ladite pluralité d'éléments d'emballage tressés (54) étant reliés mécaniquement entre eux par compression sans dispositif de fixation ou adhésif pour former la cartouche d'emballage unitaire (50), et
le retrait de la cartouche d'emballage (50) de l'ensemble d'outil de matrice (70) en tant qu'ensemble unitaire, ledit ensemble unitaire étant configuré pour une installation ultérieure à l'intérieur du dispositif de régulation de fluide (10),
ladite cartouche d'emballage unitaire étant appropriée pour une utilisation avec un dispositif de régulation de fluide et comprenant un corps principal de cartouche composé d'une pluralité d'éléments d'emballage tressés (54) qui sont empilés ensemble pour former la cartouche d'emballage unitaire (50), où la pluralité d'éléments d'emballage tressés (54) sont reliés mécaniquement ensemble sans dispositif de fixation ou adhésif.

2. Procédé de la revendication 1, lesdites forces de compression étant appliquées simultanément ou séquentiellement.

3. Procédé de la revendication 1, comprenant en outre, après l'étape de compression de la pluralité d'éléments d'emballage tressés (54) dans la première direction, la réorientation de l'ensemble d'outil de matrice (70) afin que les éléments d'emballage tressés (54) puissent être comprimés dans la seconde direction.

4. Procédé de la revendication 1, comprenant en outre l'assemblage de l'ensemble d'outil de matrice (70) avec un composant de cylindre (72) possédant une chambre (74), un élément siège (76) disposé dans la chambre, et un montant (82) disposé dans une chambre de l'élément siège, ladite pluralité de d'éléments d'emballage tressés (54) étant disposés à l'intérieur de la chambre (74) du composant de cylindre (72).

5. Procédé de la revendication 4, ledit ensemble d'outil de matrice (70) comprenant en outre un ou plusieurs éléments d'arrêt (86, 92), de préférence des premier et second éléments d'arrêt (86, 92), en contact respectivement avec les surfaces supérieure et inférieure du composant de cylindre (72).

6. Procédé de la revendication 1, comprenant en outre le maintien des forces de compression sur la pluralité d'éléments d'emballage tressés (54) pendant une période de temps sélectionnée.

7. Procédé de la revendication 6, comprenant en outre le maintien des forces de compression sur la pluralité d'éléments d'emballage tressés (54) pendant une période de temps comprise entre environ 1 seconde et environ 90 secondes.

8. Procédé de la revendication 1, ladite densité de chacun de la pluralité d'éléments d'emballage tressés (54) formant la cartouche d'emballage (50) étant comprise entre environ 1,2 g/cc et environ 2,5 g/cc.

9. Procédé de la revendication 1, comprenant en outre la compression simultanée de la pluralité d'éléments d'emballage tressés (54) dans la première direction et la seconde direction et le maintien des forces de compression sur la pluralité d'éléments d'emballage tressés (54) pendant une période de temps sélectionnée.
